# EUROPEAN PATENT APPLICATION

(11) **EP 4 102 592 A1**
(43) Date of publication of application: **14.12.2022**
(21) Application number: 20917376.4
(22) Date of filing: 17.11.2020
(51) Int. Cl.: H01M 4/04, H01M 4/139, H01G 11/06, H01G 11/50, H01G 11/86, H01G 13/00

(54) **DOPING SYSTEM, AND METHOD FOR MANUFACTURING ELECTRODE**

(30) Priority: 04.02.2020 JP 2020017198
(71) Applicant: Musashi Energy Solutions Co., Ltd., Hokuto-shi, Yamanashi 409-1501 (JP)
(72) Inventor: NAOI, Masaya, Tokyo 105-8640 (JP); IWAZAKI, Tomoya, Hokuto-shi, Yamanashi 409-1501 (JP); NODA, Koji, Hokuto-shi, Yamanashi 409-1501 (JP)
(74) Representative: TBK
(86) International application number: PCT/JP2020/042756
(87) International publication number: WO 2021/157157

(57) **Abstract**

A doping system is configured to dope an active material included in an electrode with an alkali metal. The doping system includes a doping bath, a conveyor unit, a connection unit, and a drying unit. The doping bath is configured to store a solution containing alkali metal ion and a counter electrode unit. The conveyor unit is configured to convey the electrode along a path that passes through the doping bath. The connection unit includes an electrically conductive electric power supply roller that contacts the electrode, and is configured to couple the electrode to the counter electrode unit. The drying unit is configured to spray a gas onto the electrode that passes through the doping bath and is being conveyed to the electric power supply roller.

## Description

### CROSS-REFERENCE TO RELATED APPLICATION

This international application claims the benefit of Japanese Patent Application No. 2020-017198, filed on February 4, 2020 in the Japan Patent Office, and the entire disclosure of Japanese Patent Application No. 2020-017198 is incorporated herein by reference.

### TECHNICAL FIELD

The present disclosure relates to a doping system and a method of manufacturing an electrode.

### BACKGROUND ART

In recent years, downsizing and weight reduction of electronic devices have been remarkable, which further increases a demand for downsizing and weight reduction also of batteries used as drive power supplies for the electronic devices.

To satisfy such a demand for downsizing and weight reduction, nonaqueous electrolyte rechargeable batteries, typified by a lithium-ion rechargeable battery, have been developed. As a power storage device applicable to a use that requires high energy density characteristics and high output characteristics, a lithium ion capacitor is known. In addition, a sodium ion battery and a sodium ion capacitor, using sodium that is lower in cost and is a richer resource than lithium, are also known.

A process of doping an electrode with an alkali metal in advance (generally called pre-doping) is adopted in these batteries and capacitors for various purposes. Various methods of pre-doping an electrode with an alkali metal are known; for example, Patent Documents 1 and 2 disclose a so-called single-wafer processing method, in which pre-doping is executed in a setting where a cut electrode plate and an alkali metal plate are separated by a separator and placed in a electrolyte solution. Meanwhile, Patent Documents 3 to 6 disclose a so-called continuous method, in which the pre-doping is executed while a belt-like electrode plate is transferred through an electrolyte solution.

### PRIOR ART DOCUMENTS

### PATENT DOCUMENTS

Patent Document 1: Japanese Unexamined Patent Application Publication No. H9-293499
Patent Document 2: Japanese Unexamined Patent Application Publication No. 2012-069894
Patent Document 3: Japanese Unexamined Patent Application Publication No. H10-308212
Patent Document 4: Japanese Unexamined Patent Application Publication No. 2008-077963
Patent Document 5: Japanese Unexamined Patent Application Publication No. 2012-049543
Patent Document 6: Japanese Unexamined Patent Application Publication No. 2012-049544

### SUMMARY OF THE INVENTION

### PROBLEMS TO BE SOLVED BY THE INVENTION

In a case where the methods disclosed in Patent Documents 3 to 6 are used for pre-doping, an electrode may be brought to be in contact with an electric power supply roller, and then the electric power supply roller may be brought to be electrically in contact with a counter electrode unit.

A dope solution adheres to the electrode that passed through a doping bath. If the electrode that has the dope solution adhered thereto comes into contact with the electric power supply roller, a reaction occurs on the electric power supply roller, which causes an alkali metal to be precipitated on a surface of the electric power supply roller. Resistance between the electrode and the electric power supply roller having the alkali metal precipitated on the surface is high. Therefore, if the pre-doping is continued with the electric power supply roller having the alkali metal precipitated on the surface, there may be a risk that quality of the electrode is degraded.

When conveying speed of the electrode is high, the electrode is prone to catch a large amount of the dope solution. Therefore, the precipitation of the alkali metal on the surface of the electric power supply roller is likely to occur when the conveying speed of the electrode is high. If a process of exchanging the electric power supply roller having the alkali metal precipitated on the surface becomes frequent, there may be a risk that productivity of the electrode is decreased.

In one aspect of the present disclosure, it is preferable to provide a doping system and a method of manufacturing an electrode that can inhibit the precipitation of the alkali metal on the surface of the electric power supply roller.

### MEANS FOR SOLVING THE PROBLEMS

One aspect of the present disclosure is a doping system configured to dope an active material included in an electrode with an alkali metal. The doping system comprises a doping bath configured to store a solution containing alkali metal ion and a counter electrode unit; a conveyor unit configured to convey the electrode along a path that passes through the doping bath; a connection unit including an electrically conductive electric power supply roller that contacts the electrode, the connection unit being configured to electrically couple the electrode to the counter electrode unit; and a drying unit configured to spray a gas onto the electrode that passed through the doping bath and is being conveyed to the electric power supply roller.

The doping system in one aspect of the present disclosure can spray a gas onto an electrode that passed through the doping bath and is being conveyed to the electric power supply roller and dry the electrode. Therefore, it is possible to inhibit precipitation of the alkali metal on a surface of the electric power supply roller.

Another aspect of the present disclosure is a method of manufacturing an electrode including an active material doped with an alkali metal. The method of manufacturing an electrode in another aspect of the present disclosure comprises conveying an electrode including an active material along a path that passes through a doping bath, where the doping bath stores a solution containing alkali metal ion and a counter electrode unit; drying the electrode that passed through the doping bath; and electrically coupling the electrode thus dried to the counter electrode unit.

According to the method of manufacturing an electrode in another aspect of the present disclosure, it is possible to inhibit the electrode that has the dope solution adhered thereto from electrically coming into contact with the counter electrode unit. Therefore, it is possible to inhibit precipitation of the alkali metal on a surface of a member that contacts the electrode.

Yet another aspect of the present disclosure is a doping system configured to dope an active material included in an electrode with an alkali metal. The doping system comprises a doping bath configured to store a solution containing alkali metal ion and a counter electrode unit; a conveyor unit configured to convey the electrode along a path that passes through the doping bath; a connection unit including an electrically conductive electric power supply roller that contacts the electrode, the connection unit being configured to electrically couple the electrode to the counter electrode unit; and a power source configured to be coupled to a main body of the doping system insulated from the doping bath and the electric power supply roller. An electric potential of a terminal of the power source that is coupled to the electric power supply roller is lower than an electric potential of a terminal of the power source that is coupled to the main body.

The doping system in yet another aspect of the present disclosure can inhibit precipitation of the alkali metal on a surface of the doping bath. Inhibition of the precipitation of the alkali metal on the surface of the doping bath facilitates stabilization of pre-doping, which then facilitates manufacturing of high-quality electrodes.

### BRIEF DESCRIPTION OF THE DRAWINGS

FIG. 1 is an explanatory diagram showing a configuration of a doping system.
FIG. 2 is an explanatory diagram showing a configuration of the doping bath when the doping system has a first electrical configuration.
FIG. 3 is an explanatory diagram showing a configuration of the doping bath when the doping system has a second electrical configuration.
FIG. 4 is an explanatory diagram showing a configuration of the doping bath when the doping system has a third electrical configuration.
FIG. 5 is an explanatory diagram showing a configuration of a counter electrode unit.
FIG. 6 is an explanatory diagram showing a configuration of a drying system when observed from a top view.
FIG. 7 is an explanatory diagram showing the configuration of the drying system when observed from a front view in FIG. 1.
FIG. 8 is an explanatory diagram showing the configuration of the drying system when observed from a right-side view in FIG. 1.
FIG. 9 is an explanatory diagram showing the configuration of the drying system when observed from a back view in FIG. 1.
FIG. 10 is an explanatory diagram showing a configuration of a first blower having openings aligned to form a straight line.
FIG. 11 is a sectional view taken along line XI-XI in FIG. 10.
FIG. 12 is an explanatory diagram showing a configuration of the first blower having a slit-shaped opening.
FIG. 13 is a sectional view taken along line XIII-XIII in FIG. 12.
FIG. 14 is an explanatory diagram showing a configuration of the first blower having openings arranged such that circumferential positions of the openings alternately differ along the first blower.
FIG. 15 is a sectional view taken along line XV-XV in FIG. 14.
FIG. 16 is a plan view showing a configuration of an electrode.
FIG. 17 is a sectional view taken along line XVII-XVII in FIG. 16.

### EXPLANATION OF REFERENCE NUMERALS

1...electrode; 1A...doped electrode; 11...doping system; 15, 17, 19...doping bath; 21, 23...cleaning bath; 25, 27, 29, 31, 33, 65, 67, 69, 70, 35, 37, 39, 40, 41, 43, 45, 46, 47, 49, 51, 52, 53, 55, 57, 58, 59, 61, 64, 71, 73, 75, 77, 79, 81, 83, 85, 87, 89, 91, 93...conveyor roller; 94...active material layer unformed portion; 96...center portion; 101...supply roll; 103...winding roll; 105...supporting platform; 107...circulation filter unit; 109, 110, 111, 112, 113, 114...power source; 109A...first terminal; 109B...second terminal; 110A...first terminal; 110B...second terminal; 117...tab cleaner; 119...recovery unit; 121...end portion sensor; 123, 135...partition plate; 125, 127, 145, 147...supporting rod; 131...upstream bath; 133...downstream bath; 137, 139, 141, 143...counter electrode unit; 149, 151...space; 153...conductive base material; 155...alkali metal containing plate; 157...porous insulating member; 161...filter; 163...pump; 165...pipe; 193...current collector; 195...active material layer; 201A-F...drying unit; 203...device housing; 205...insulating plate; 207...small-sized power source; 209...resistance; 210...diode; 211...base body; 213...first blower; 215...second blower; 217...connecting portion; 219...first surface; 221...second surface; 223...opening; 225...gas.

### MODE FOR CARRYING OUT THE INVENTION

Example embodiments of the present disclosure will be explained with reference to the drawings.

### [Embodiment 1]

### 1. Configuration of Doping System 11

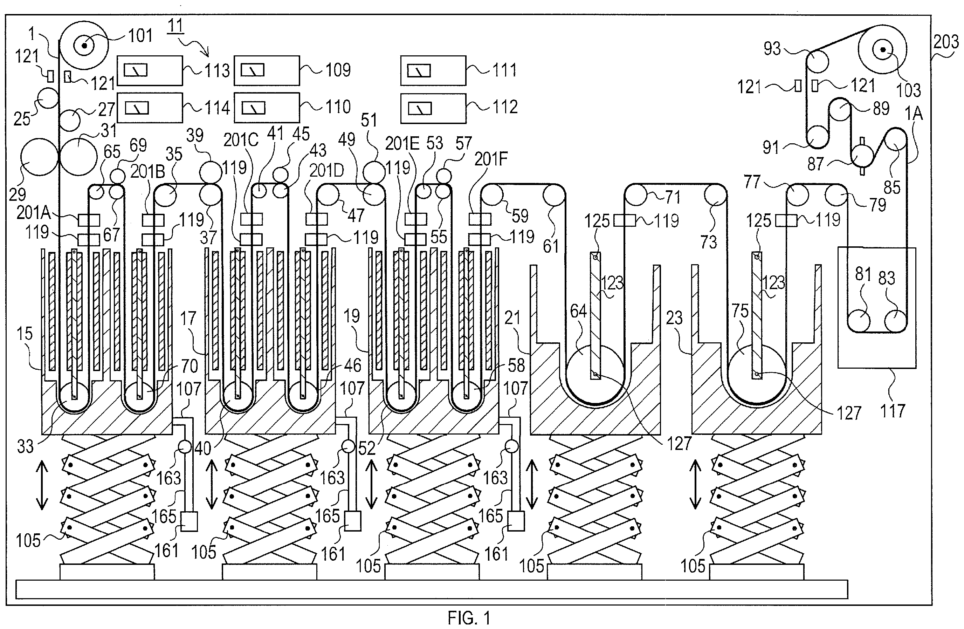

A doping system 11 dopes an active material included in an electrode 1, which will be explained later, with an alkali metal. A configuration of the doping system 11 will be explained with reference to FIG. 1 to FIG. 5. As shown in FIG. 1, the doping system 11 comprises doping baths 15, 17, 19; cleaning baths 21, 23; conveyor rollers 25, 27, 29, 31, 33, 65, 67, 69, 70, 35, 37, 39, 40, 41, 43, 45, 46, 47, 49, 51, 52, 53, 55, 57, 58, 59, 61, 64, 71, 73, 75, 77, 79, 81, 83, 85, 87, 89, 91, 93 (hereinafter, these conveyor rollers may be collectively referred to as a group of conveyor rollers); a supply roll 101; a winding roll 103; supporting platforms 105; circulation filter units 107; six power sources 109, 110, 111, 112, 113, 114; a tab cleaner 117; recovery units 119; drying units 201A to 201F; end portion sensors 121; and a device housing 203. The group of conveyor rollers corresponds to a conveyor unit.

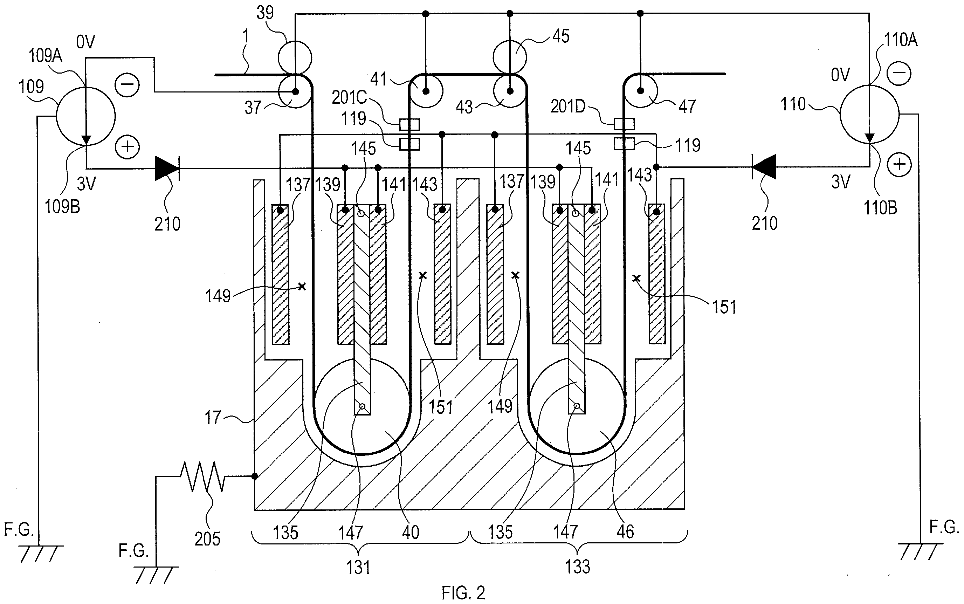

A configuration of the doping bath 17 will be explained with reference to FIG. 2 to FIG. 4. The doping bath 17 includes an upstream bath 131 and a downstream bath 133. The upstream bath 131 is situated on a side of the doping bath 17 close to the supply roll 101 (hereinafter referred to as an upstream side); the downstream bath 133 is situated on a side of the doping bath 17 close to the winding roll 103 (hereinafter referred to as a downstream side).

Firstly, a configuration of the upstream bath 131 will be explained. The upstream bath 131 is a square bath with an open top. A bottom surface of the upstream bath 131 has an approximately U-shaped cross section. The upstream bath 131 includes a partition plate 135. The upstream bath 131 stores four counter electrode units 137, 139, 141, 143.

The partition plate 135 is supported by a supporting rod 145 that passes through an upper end of the partition plate 135. The supporting rod 145 is fixed on a wall or the like which is not shown in the drawings. The partition plate 135 extends in vertical directions and divides an interior of the upstream bath 131 into two spaces. A conveyor roller 40 is attached to a lower end of the partition plate 135. The partition plate 135 and the conveyor roller 40 are supported by a supporting rod 147 that passes through the partition plate 135 and the conveyor roller 40. A vicinity of the lower end of the partition plate 135 is cut off so that the partition plate 135 does not contact the conveyor roller 40. A space exists between the conveyor roller 40 and the bottom surface of the upstream bath 131.

A counter electrode unit 137 is stored on the upstream side of the upstream bath 131. Counter electrode units 139, 141 are arranged to interpose the partition plate 135 from two opposing sides. A counter electrode unit 143 is stored on the downstream side of the upstream bath 131.

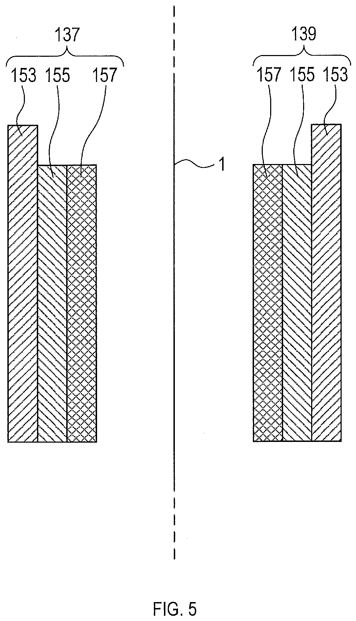

A space 149 exists between the counter electrode unit 137 and the counter electrode unit 139. A space 151 exists between the counter electrode unit 141 and the counter electrode unit 143. Configurations of the counter electrode units 137, 139, 141, 143 are similar to one another. The present disclosure explains the configuration of the counter electrode units 137, 139 with reference to FIG. 5.

The counter electrode units 137, 139 include a conductive base material 153, an alkali metal-containing plate 155, and a porous insulating member 157 layered together. Materials for the conductive base material 153 may be copper, stainless steel, nickel, and the like for example. A form of the alkali metal-containing plate 155 is not particularly limited; it may be an alkali metal plate, an alkali metal alloy plate, and the like for example. A thickness of the alkali metal-containing plate 155 is 0.03 to 6 mm for example.

The porous insulating member 157 has a plate shape. The porous insulating member 157 is layered on the alkali metal-containing plate 155. The plate-shape of the porous insulating member 157 is rendered when the porous insulating member 157 is layered on the alkali metal-containing plate 155. The porous insulating member 157 may be a member that retains a certain shape by itself, or, may be an easily deformable member such as a net.

The porous insulating member 157 is a porous material; and therefore allows a dope solution, which will be explained later, to pass through the porous insulating member 157. This allows the alkali metal-containing plate 155 to contact the dope solution.

Examples of the porous insulating member 157 may include a resin mesh and the like. The resin may be, for example, polyethylene, polypropylene, nylon, polyetheretherketone, and polytetrafluoroethylene. An opening of the mesh can be appropriately determined. The opening of the mesh is, for example, from 0.1 µm to 10 mm, and preferably from 0.1 mm to 5 mm. The thickness of the mesh can be appropriately determined. The thickness of the mesh is, for example, from 1 µm to 10 mm, and preferably from 30 µm to 1 mm. An opening ratio of the mesh can be appropriately determined. The opening ratio of the mesh is, for example, from 5 to 98%, and preferably from 5 to 95%, and more preferably from 50 to 95%.

The porous insulating member 157 may be entirely made from an insulating material or may partly include an insulating layer.

The downstream bath 133 basically has a configuration similar to the upstream bath 131. However, the conveyor roller 46 is situated in the interior of the downstream bath 133 instead of the conveyor roller 40. The counter electrode units 137, 139, 141, 143 in the downstream bath 133 are coupled to one electrode of the power source 110.

The doping bath 17 and its surroundings have an electrical configuration shown in FIG. 2 (hereinafter referred to as the first electrical configuration) for example. Each of the power sources 109, 110 is a bipolar power source. A first terminal 109A of the power source 109 is coupled to the conveyor rollers 37, 41, 43, 47 via a cable. The conveyor rollers 37, 41, 43, 47 is situated above the doping bath 17. As mentioned later, the conveyor rollers 37, 41, 43, 47 are electric power supply rollers made from an electrically conductive material.

A second terminal 109B of the power source 109 is coupled to the counter electrode units 139, 141 stored in the upstream bath 131 and the counter electrode units 139, 141 stored in the downstream bath 133 via a cable.

A first terminal 110A of the power source 110 is coupled to the conveyor rollers 37, 41, 43, 47 via a cable. A second terminal 110B of the power source 110 is coupled to the counter electrode units 137, 143 stored in the upstream bath 131 and the counter electrode units 137, 143 stored in the downstream bath 133 via a cable.

An electric potential of each of the first terminal 109A and the first terminal 110A is 0 V. An electric potential of each of the second terminal 109B and the second terminal 110B is positive. The positive electric potential is, for example, +3 V.

A portion of the power sources 109, 110 where the electric potential is 0 V is coupled to the device housing 203 and creates a reference potential in the first electrical configuration. A reference sign "F.G." in FIG. 2 to FIG. 4 indicates the device housing 203. The doping bath 17 is coupled to the device housing 203 via an insulating plate 205. The doping bath 17 and the device body 203 are insulated from each other. The device body 203 corresponds to a main body of the doping system 11.

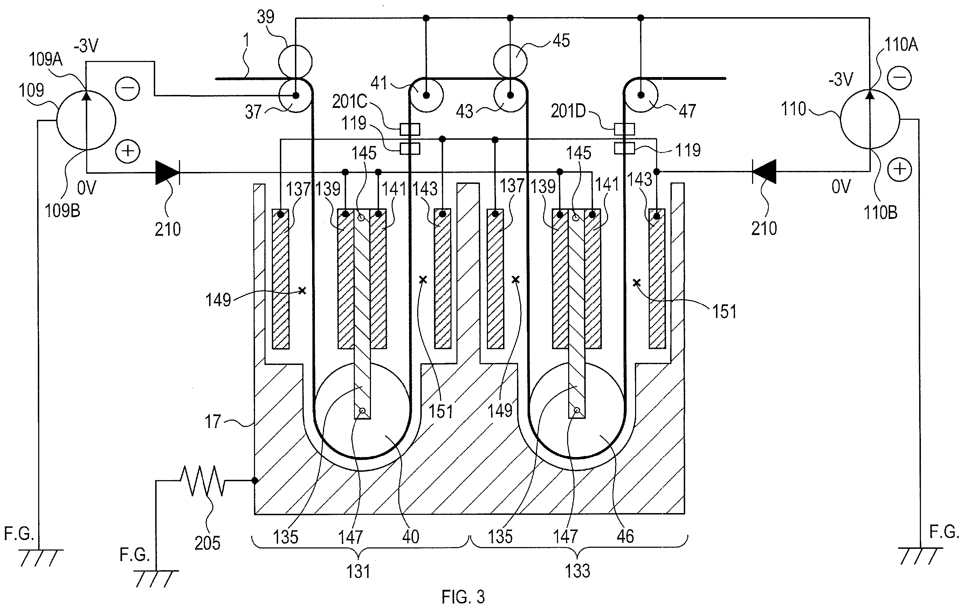

The doping bath 17 and its surroundings may also have an electrical configuration shown in FIG. 3 (hereinafter referred to as the second electrical configuration). The second electrical configuration is basically the same as the first electrical configuration. However, in the second electrical configuration, an electric potential of each of the first terminal 109A and the first terminal 110A is negative. A negative electric potential is, for example, -3 V. In addition, an electric potential of each of the second terminal 109B and the second terminal 110 B is 0 V.

Because the power source 109 and the power source 110 are bipolar power sources, it is possible to reverse the direction of a flow of an electric current. In the second electrical configuration, a negative electric current flowed from a terminal coupled to a positive (side) terminal of the bipolar power source, and the electric potential on a negative (side) terminal was set to 0 V. Accordingly, the sign of voltage of the terminal coupled to the positive (side) terminal is negative. Note that, in FIG. 3, to clarify the polarity of the bipolar power source, the direction of a symbol representing a direct-current power source is illustrated to match the direction of the positive terminal of the bipolar power source.

In this second electrical configuration, the electric potentials of the first terminal 109A and the first terminal 110A of the power source 109 and the power source 110 become lower than the electric potentials of the terminals of the power source 109 and the power source 110 coupled to the device housing 203. Accordingly, the electric potentials of the conveyor rollers 37, 41, 43, 47, which are the electric power supply rollers, become lower than 0 V. In addition, the electric potential of the electrode 1 that contacts the electric power supply rollers becomes low compared with the electric potential of the doping bath 17. Because lithium dissolved from the counter electrode units 137, 139, 141, 143 is positively charged, it is easy for lithium to selectively move to the electrode 1 with lower electric potential. This consequently inhibits precipitation of lithium on a surface of the doping bath 17, which has an electric potential in the vicinity of 0 V. This inhibition of precipitation of lithium on the surface of the doping bath 17 facilitates stabilization of pre-doping, which then facilitates manufacturing of the electrode 1 with high-quality.

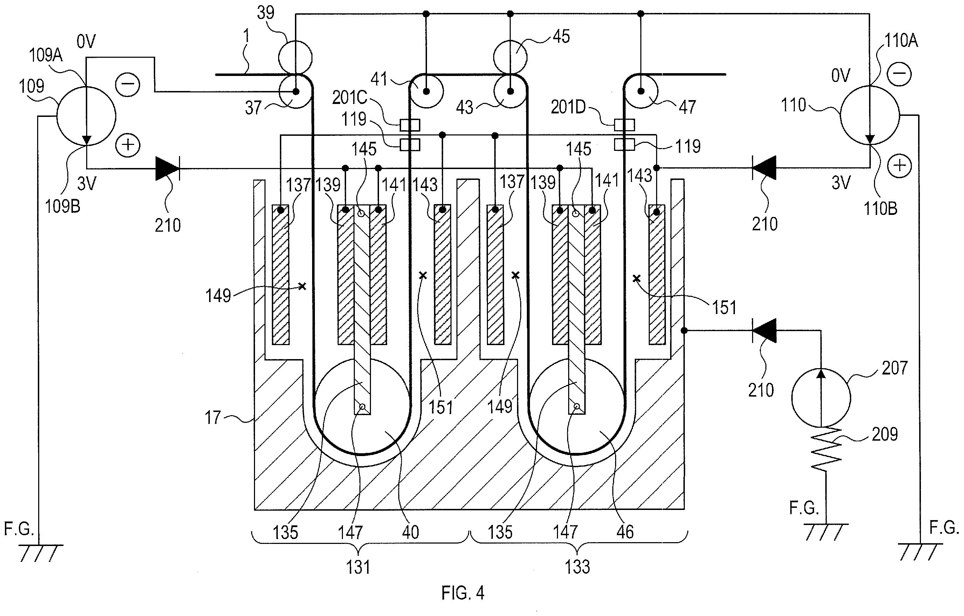

The doping bath 17 and its surroundings may also have an electrical configuration shown in FIG. 4 (hereinafter referred to as the third electrical configuration). The third electrical configuration is basically the same as the first electrical configuration. However, in the third electrical configuration, the electric potential of the doping bath 17 is positive. A positive electric potential is, for example, +4 V. As a method of changing the electric potential of the doping bath 17 to a positive electric potential, for example, there is a method of using a small-sized power source 207 and a resistance 209.

In this third electrical configuration, the electric potentials of the portions of the power source 109 and the power source 110 coupled to the device housing 203 are identical to the electric potentials of the first terminal 109A and the first terminal 110A of the power source 109 and the power source 110. As mentioned above, the doping bath 17, for example, have a positive electric potential of +4 V. Accordingly, as lithium dissolved from the counter electrode units 137, 139, 141, 143 is positively charged to have a positive electric potential and become cationic, it is easy for lithium to move to the electrode 1 that has an electric potential in the vicinity of 0 V. This consequently inhibits precipitation of lithium on the surface of the doping bath 17 that has a positive electric potential of +4 V, which then facilitates manufacturing of the electrode 1 with high-quality.

The electric connection path from the conveyor rollers 37, 41, 43, 47 through the power source 109 or the power source 110 leading to the counter electrode units 137, 139, 141, 143 stored in the doping bath 17 corresponds to the connection unit.

The doping bath 15 basically has the same configuration as the doping bath 17. However, the conveyor rollers 33, 70 are disposed inside the doping bath 15 in place of the conveyor rollers 40, 46. The counter electrode units 137, 139, 141, 143 stored in the doping bath 15 are coupled to the power sources 113, 114 in place of the power sources 109, 110. The power sources 113, 114 are bipolar power sources. The power sources 113, 114 are coupled to the conveyor rollers 29, 65, 67, 35 in place of the conveyor rollers 37, 41, 43, 47. The conveyor rollers 29, 65, 67, 35 are situated above the doping bath 15. As mentioned later, the conveyor rollers 29, 65, 67, 35 are electric power supply rollers made from an electrically conductive material.

The electric connection path from the conveyor rollers 29, 65, 67, 35 through the power source 113 or the power source 114 leading to the counter electrode units 137, 139, 141, 143 stored in the doping bath 15 corresponds to the connection unit.

The doping bath 19 basically has the same configuration as the doping bath 17. However, the conveyor rollers 52, 58 are disposed inside the doping bath 19 in place of the conveyor rollers 40, 46. The counter electrode units 137, 139, 141, 143 stored in the doping bath 19 are coupled to the power sources 111, 112 in place of the power sources 109, 110. The power sources 111, 112 are bipolar power sources. The power sources 111, 112 are coupled to the conveyor rollers 49, 53, 55, 59 in place of the conveyor rollers 37, 41, 43, 47. The conveyor rollers 49, 53, 55, 59 are situated above the doping bath 19. As mentioned later, the conveyor rollers 49, 53, 55, 59 are electric power supply rollers made from an electrically conductive material.

The electric connection path from the conveyor rollers 49, 53, 55, 59 through the power source 111 or the power source 112 leading to the counter electrode units 137, 139, 141, 143 stored in the doping bath 19 corresponds to the connection unit.

The cleaning bath 21 is a square bath with an open top. A bottom surface of the cleaning bath 21 has an approximately U-shaped cross section. The cleaning bath 21 includes the partition plate 123. The partition plate 123 is supported by a supporting rod 125 that passes through an upper end of the partition plate 123. The supporting rod 125 is fixed on a wall or the like which is not shown in the drawings. The partition plate 123 extends in the vertical directions and divides an interior of the cleaning bath 21 into two spaces.

The conveyor roller 64 is attached to a lower end of the partition plate 123. The partition plate 123 and the conveyor roller 64 are supported by the supporting rod 127 that passes through the partition plate 123 and the conveyor roller 64. A vicinity of the lower end of the partition plate 123 is cut off so that the partition plate 123 does not contact the conveyor roller 64. A space exists between the conveyor roller 64 and the bottom surface of the cleaning bath 21.

The cleaning bath 23 has a configuration basically similar to the cleaning bath 21. However, the conveyor roller 75 is situated in an interior of the cleaning bath 23 instead of the conveyor roller 33. The cleaning baths 21 and 23 correspond to a cleaning unit.

Among the group of conveyor rollers, the conveyor rollers 29, 31, 67, 69, 35, 37, 39, 41, 43, 45, 47, 49, 51, 53, 55, 57, 59 are made from an electrically conductive material. The conveyor roller 29, 31, 67, 69, 35, 37, 39, 41, 43, 45, 47, 49, 51, 53, 55, 57, 59 correspond to an electrically conductive electric power supply roller.

Other conveyor rollers of the group of conveyor rollers are made of elastomer except for their bearing portions. The group of conveyor rollers convey an electrode 1 along a given path. The path along which the group of conveyor rollers conveys the electrode 1 starts from the supply roll 101, travels through the doping bath 15, the doping bath 17, the doping bath 19, the cleaning bath 21, the cleaning bath 23, and the tab cleaner 117 in this order, and ends at the winding roll 103.

A part of the path that passes through the doping bath 15 is designed as follows. The path begins with a downward travel drawn by the conveyor rollers 29, 31 through the space 149 of the upstream bath 131. The direction of travel is changed upward by the conveyor roller 33 to travel through the space 151 of the upstream bath 131 upward. The direction of travel is then changed downward by the conveyor rollers 65, 67 to travel through the space 149 of the downstream bath 133 downward. Then the direction of travel is changed upward by the conveyor roller 70 to travel through the space 151 of the downstream bath 133 upward. The direction of travel is ultimately changed to be horizontal by the conveyor roller 35 to travel towards the doping bath 17.

Another part of the aforementioned path that passes through the doping bath 17 is designed as follows. Firstly, the direction of travel is changed downward by the conveyor roller 37 to travel through the space 149 of the upstream bath 131 downward. The direction of travel is then changed upward by the conveyor roller 40 to travel through the space 151 of the upstream bath 131 upward. The direction of travel is then changed downward by the conveyor rollers 41, 43 to travel through the space 149 of the downstream bath 133 downward. Then the direction of travel is changed upward by the conveyor roller 46 to travel through the space 151 of the downstream bath 133 upward. The direction of travel is ultimately changed to be horizontal by the conveyor roller 47 to travel towards the doping bath 19.

Another part of the aforementioned path that passes through the doping bath 19 is designed as follows. Firstly, the direction of travel is changed downward by the conveyor roller 49 to travel through the space 149 of the upstream bath 131 downward. The direction of travel is then changed upward by the conveyor roller 52 to travel through the space 151 of the upstream bath 131 upward. The direction of travel is then changed downward by the conveyor rollers 53, 55 to travel through the space 149 of the downstream bath 133 downward. Then the direction of travel is changed upward by the conveyor roller 58 to travel through the space 151 of the downstream bath 133 upward. The direction of travel is ultimately changed to be horizontal by the conveyor roller 59 to travel towards the cleaning bath 21.

Another part of the aforementioned path that passes through the cleaning bath 21 begins with changing its direction of travel downward by the conveyor roller 61 to make a downward travel. The direction of travel is then changed upward by the conveyor roller 64.

Another part of the aforementioned path that passes through the cleaning bath 23 begins with changing its direction of travel downward by the conveyor roller 73 to make a downward travel. The direction of travel is then changed upward by the conveyor roller 75.

The electrode 1 is wound around the supply roll 101. In other words, the supply roll 101 holds the electrode 1 in a wound state. An active material in the electrode 1 held by the supply roll 101 is not yet doped with the alkali metal.

The group of conveyor rollers draws and conveys the electrode 1 held by the supply roll 101. The winding roll 103 winds up and stores the electrode 1 conveyed by the group of conveyor rollers. The electrode 1 stored on the winding roll 103 has undergone a pre-doping process through the doping baths 15, 17, 19. The active material in the electrode 1 stored on the winding roll 103 is therefore pre-doped with the alkali metal. The electrode 1 stored on the winding roll 103 is a doped electrode 1A.

The supporting platforms 105 support the doping baths 15, 17, 19, and the cleaning baths 21, 23 from below. The supporting platforms 105 can change their height. Each of the doping baths 15, 17, 19 has the circulation filter unit 107. The circulation filter unit 107 includes a filter 161, a pump 163, and a pipe 165.

In the circulation filter unit 107 disposed in the doping bath 17, the pipe 165 is a circulation pipe that exits the doping bath 17, passes through the pump 163 and the filter 161 in this order, and returns to the doping bath 17. The dope solution in the doping bath 17 circulates through the pipe 165 and the filter 161 by a driving force of the pump 163, and returns to the doping bath 17. In this process, foreign matters in the dope solution are filtered by the filter 161. Such foreign matters include those precipitated from the dope solution and those generated from the electrode 1. A material used to form the filter 161 is a resin such as polypropylene and polytetrafluoroethylene. A pore size of the filter 161 can be appropriately determined. The pore size of the filter 161 is, for example, 0.2 µm or greater and 50 µm or smaller.

The circulation filter units 107 disposed in the doping baths 15, 19 have a similar configuration and exert a similar effect. In FIG. 1 to FIG. 4, the dope solution is not illustrated for the purpose of convenience.

The tab cleaner 117 cleans an active material layer unformed portion 94 of the electrode 1, which will be explained later. The recovery units 119 are individually disposed in each of the doping baths 15, 17, 19, and the cleaning baths 21, 23. The recovery units 119 collect the solution the electrode 1 takes out from the baths and return the collected solution back into the baths.

The recovery unit 119 includes, for example, remover rollers that interpose and press the electrode 1 from two opposing sides, and a droplet guide. The droplet guide guides the dope solution or a cleaning solution absorbed by the remover rollers back into the doping baths 15, 17, 19 or the cleaning baths 21, 23.

The recovery units 119 disposed in the doping bath 15 are positioned in a proximity of a portion of the electrode 1 that passed through the upstream bath 131 of the doping bath 15 and is being conveyed towards the conveyor roller 65 and in a proximity of a portion of the electrode 1 that passed through the downstream bath 133 of the doping bath 15 and is being conveyed towards the conveyor roller 35.

The recovery units 119 disposed in the doping bath 17 are positioned in a proximity of a portion of the electrode 1 that passed the upstream bath 131 of the doping bath 17 and is being conveyed towards the conveyor roller 41 and in a proximity of a portion of the electrode 1 that passed the downstream bath 133 of the doping bath 17 and is being conveyed towards the conveyor roller 47.

The recovery units 119 disposed in the doping bath 19 are positioned in a proximity of a portion of the electrode 1 that passed the upstream bath 131 of the doping bath 19 and is being conveyed towards the conveyor roller 53 and in a proximity of a portion of the electrode 1 that passed the downstream bath 133 of the doping bath 19 and is being conveyed towards the conveyor roller 59.

The end portion sensors 121 detect the position of an end portion of a width W of the electrode 1. The doping system 11 adjusts positions of the supply roll 101 and the winding roll 103 relative to the width W of the electrode 1 based on a result of detection by the end portion sensor 121. The device housing 203 houses other elements of the doping system 11.

In the present embodiment, the doping system 11 includes two cleaning baths 21, 23. The number of the cleaning bath may be one, or three or more. The number of the cleaning bath is preferably two or more since the total amount of use of the cleaning solution can be reduced.

In the present embodiment, the conveying paths of the electrode 1 through the cleaning baths 21, 23 take one round trip each in the vertical directions. The conveying paths of the electrode 1 through the cleaning baths 21, 23 may take two round trips each in the vertical directions similarly to the conveying paths through the doping baths 15, 17, 19.

### 2. Configuration of Drying Units 201A to 201F

As shown in FIG. 1, a drying unit 201A is positioned in a proximity of a portion of the electrode 1 that passed the upstream bath 131 of the doping bath 15 and is being conveyed towards the conveyor roller 65. The drying unit 201A is situated closer to the conveyor roller 65 than the neighboring recovery unit 119 is. Because the drying unit 201A is situated closer to the conveyor roller 65 than the recovery unit 119 is, it is possible to further inhibit precipitation of the alkali metal on a surface of the electric power supply roller.

A drying unit 201B is positioned in a proximity of a portion of the electrode 1 that passed the downstream bath 133 of the doping bath 15 and is being conveyed towards the conveyor roller 35. The drying unit 201B is situated closer to the conveyer roller 35 than the neighboring recovery unit 119 is.

A drying unit 201C is positioned in a proximity of a portion of the electrode 1 that passed the upstream bath 131 of the doping bath 17 and is being conveyed towards the conveyor roller 41. The drying unit 201C is situated closer to the conveyor roller 41 than the neighboring recovery unit 119 is.

A drying unit 201D is positioned in a proximity of a portion of the electrode 1 that passed the downstream bath 133 of the doping bath 17 and is being conveyed towards the conveyor roller 47. The drying unit 201D is situated closer to the conveyor roller 47 than the neighboring recovery unit 119 is.

A drying unit 201E is positioned in a proximity of a portion of the electrode 1 that passed the upstream bath 131 of the doping bath 19 and is being conveyed towards the conveyor roller 53. The drying unit 201E is situated closer to the conveyor roller 53 than the neighboring recovery unit 119 is.

A drying unit 201F is positioned in a proximity of a portion of the electrode 1 that passed the downstream bath 133 of the doping bath 19 and is being conveyed towards the conveyor roller 59. The drying unit 201F is situated closer to the conveyor roller 59 than the neighboring recovery unit 119 is.

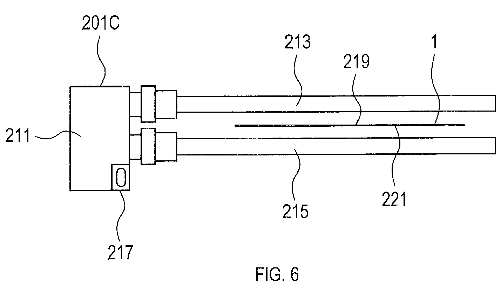

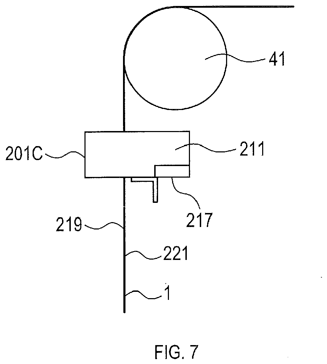

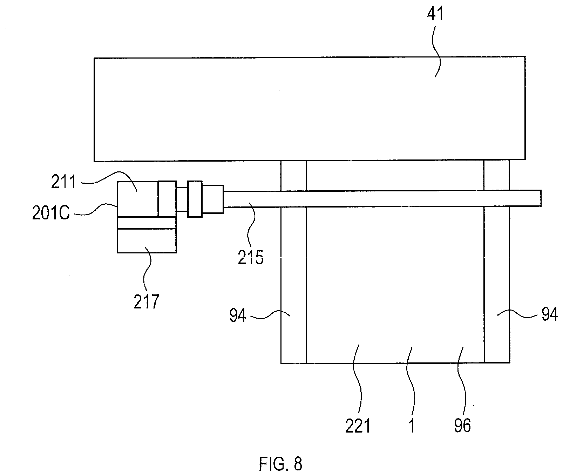

The drying units 201A to 201F have the same configuration. In the present disclosure, the configuration of the drying unit 201C will be explained with reference to FIG. 2 to FIG. 4, and FIG. 6 to FIG. 15. As shown in FIG. 6 to FIG. 9, the drying unit 201C includes a base body 211, a first blower 213, and a second blower 215.

The base body 211 has a box-like shape in its basic form. The base body 211 includes a connecting portion 217. The drying unit 201C is fixed to a supporting portion, which is not shown, via the connecting portion 217. The drying unit 201C does not contact other members except for the connecting portion 217. The supporting portion and the drying unit 201C are electrically insulated from each other by the connecting portion 217. Due to having the connecting portion 217, a short circuit between the electrode 1 and the supporting portion can be inhibited even when the first blower 213 or the second blower 215 comes into contact with the electrode 1. Materials for the connecting portion 217 is not particularly limited as long as they can insulate the supporting portion and the drying unit 201C from each other. Examples of the materials for the connecting portion 217 may include an epoxy glass.

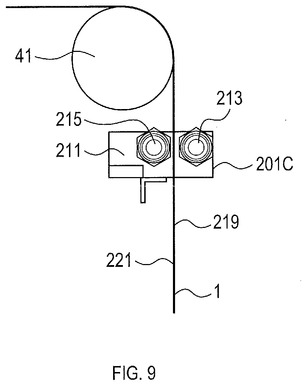

The first blower 213 and the second blower 215 each have a cylindrical shape in their basic form. Each of the first blower 213 and the second blower is attached to one surface of the base body 211. An axis of the first blower 213 is parallel to an axis of the second blower 215. As shown in FIG. 6 and FIG. 9, there is a gap between the first blower 213 and the second blower 215.

As shown in FIG. 6 and FIG. 9, the drying unit 201C is arranged such that the first blower 213 and the second blower 215 interpose the electrode 1 from two opposing sides. The first blower 213 faces a surface of the electrode 1 that later abuts the conveyor roller 45 (hereinafter referred to as a first surface 219). There is a gap between the first blower 213 and the first surface 219. An axis of the first blower 213 is parallel to width W of the electrode 1.

The second blower 215 faces a surface of the electrode 1 that later abuts the conveyor rollers 41, 43, 47 (hereinafter referred to as a second surface 221). There is a gap between the second blower 215 and the second surface 221. An axis of the second blower 215 is parallel to the width W of the electrode 1.

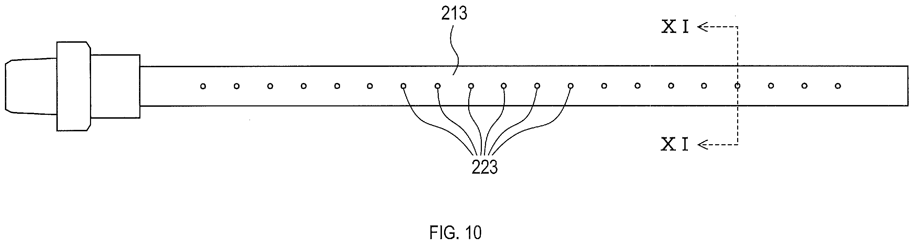

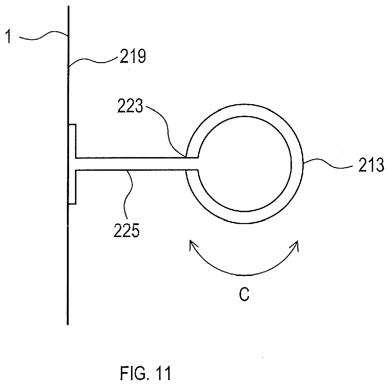

The first blower 213 includes an opening. Inside of the first blower 213 communicates with outside of the first blower 213 through the opening. FIG. 10 and FIG. 11 show examples of a form of the openings. The first blower 213 includes openings 223. Each of the openings 223 is a circular hole. The openings 223 are aligned in a straight line that is parallel to the axis of the first blower 213 and are equally spaced apart from each other. Circumferential positions of the openings 223 along a circumference C are the same. As shown in FIG. 11, the openings 223 faces the electrode 1.

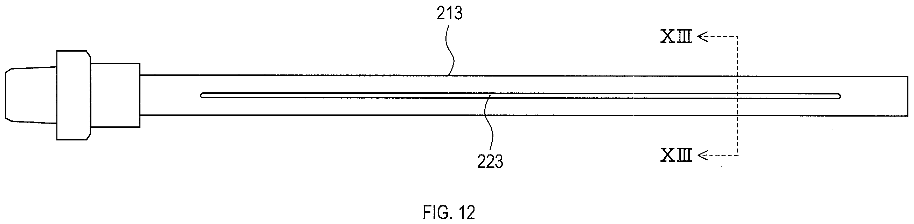

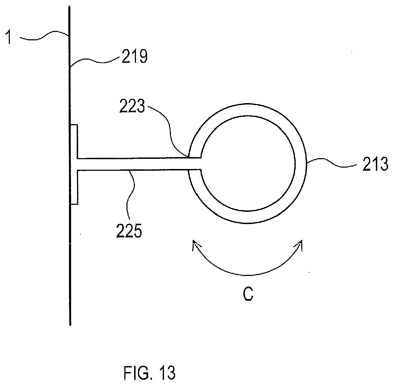

FIG. 12 and FIG. 13 show examples of a form of the opening. The first blower 213 includes a slit-shaped opening 223. The slit-shaped opening 223 extends along the axis of the first blower 213. As shown in FIG. 13, the slit-shaped opening 223 faces the electrode 1.

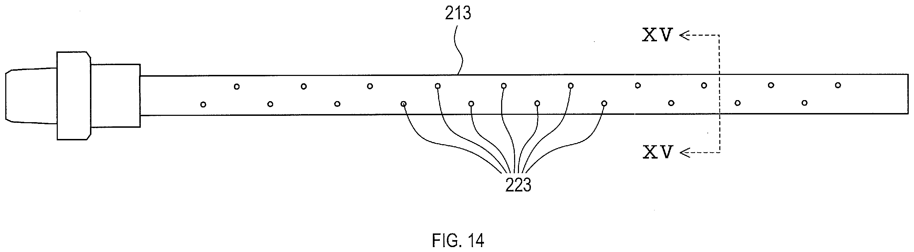

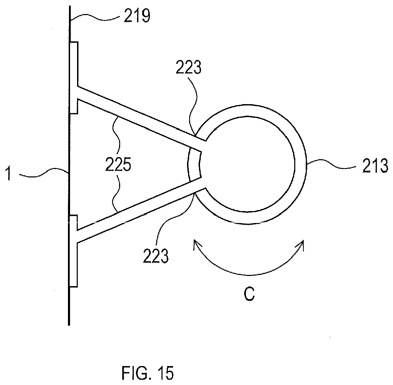

FIG. 14 and FIG. 15 show examples of a form of the opening. The first blower 213 includes the openings 223. Each of the openings 223 is a circular hole. The openings 223 are aligned along the axis of the first blower 213 and equally spaced apart from each other. There are two positions to align the openings 223 along the circumference C. The position of one opening 223 along the circumference C is different from the adjacent opening 223 along the circumference C. As shown in FIG. 15, the openings 223 face the electrode 1.

The second blower 215 has the same form as the form of the first blower 213. Examples of materials for the first blower 213 and the second blower 215 may include a resin. An example of the resin may be at least one resin selected from a group consisting of a polyolefin resin, a polyester resin, a polyarylate resin, a polyurethane resin, a polyurethane resin, a polycarbonate resin, a polyamide resin, a polyimide resin, a polyphenylene sulfide resin, and a fluorine-based resin. When the material used to form the first blower 213 and the second blower 215 is a resin, it is possible to inhibit a short circuit between the first blower 213 or the second blower 215 and the electrode 1. When a material used to form surfaces of the first blower 213 and the second blower 215 is a resin, it is possible to further inhibit a short circuit between the first blower 213 or the second blower 215 and the electrode 1.

An example of the material used to form the first blower 213 and the second blower 215 may be at least one kind of material selected from a group consisting of a metal, an alloy of two or more kinds of metals, an oxide of the metal or the alloy, and a nitride of the metal or the alloy. When the material used to form the first blower 213 and the second blower 215 is those mentioned above, excellent workability and strength are obtained.

A gas supply path is disposed from a gas supply source, which is not shown, to the inside of the first blower 213 and the second blower 215 through the base body 211. As shown in FIG. 11, FIG. 13, and FIG. 15, the first blower 213 sprays a gas 225, supplied from the gas supply path, through the opening 223 onto the first surface 219.

The second blower 215 sprays a gas, supplied from the gas supply path, through the opening 223 onto the second surface 221. Accordingly, the drying unit 201C sprays the gas onto the electrode 1 that passed through the doping bath 17 and is being conveyed towards the conveyor roller 41 by using the first blower 213 and the second blower 215.

Because the first blower 213 and the second blower 215 spray the gas onto the surfaces of the electrode 1, the electrode 1 is already dried when the electrode 1 reaches the conveyor roller 41 for example. As a consequence, it is possible to inhibit precipitation of the alkali metal on a surface of the conveyor roller 41.

In a case where the first blower 213 and the second blower 215 include the openings 223, it is preferable to have a minimized variability in gas flows between the openings 223. It is particularly preferable to have a minimized variability in gas flows between the opening 223 on a base side and the opening 223 on a tip side of the first blower 213 and the second blower 215.

In a case where the first blower 213 and the second blower 215 include the slit-shaped opening 223, it is preferable to have a minimized variability in gas flows between the base side and the tip side of the opening 223.

An example of the gas may be at least one kind of gas selected from a group consisting of argon gas, helium gas, neon gas, nitrogen gas, carbon dioxide gas, and dehumidified air removed of moisture. When the aforementioned gases are used, it is possible to inhibit a reaction between the gas and the active material. Furthermore, when the aforementioned gases are used, excellent explosion resistance is obtained because those gases can reduce oxygen concentration inside the device housing 203.

In the examples shown in FIGS. 1 to 4, the doping system 11 includes a single drying unit 201C. For example, the doping system 11 may include two or more drying units 201C. Each of the drying units 201C is positioned in a proximity of a portion of the electrode 1 that passed through the upstream bath 131 of the doping bath 17 and is being conveyed towards the conveyor roller 41. The drying units 201C are aligned along the length of the electrode 1.

The drying units 201A, B, and D to F have the same configuration and effects as the drying unit 201C. However, the drying units 201A, B, and D to F each spray the gas onto a portion of the electrode 1 in their proximity to dry the electrode 1.

For example, an exhaust nozzle can be disposed near the drying units 201A to F. If the exhaust nozzle is disposed, the electrode 1 can be dried further effectively.

### 3. Configuration of Electrode 1

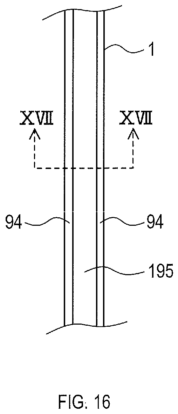

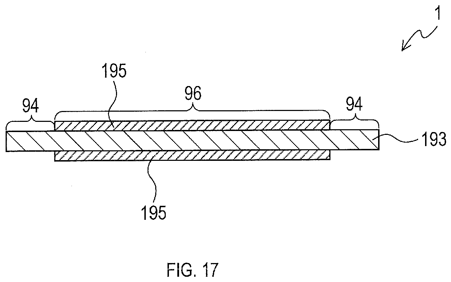

A configuration of the electrode 1 will be explained with reference to FIG. 16 and FIG. 17. As shown in FIG. 16, the electrode 1 has a strip-like shape. As shown in FIG. 17, the electrode 1 comprises a current collector 193 having a strip-like shape and active material layers 195 formed on two opposing sides of the current collector 193.

Active material layer unformed portions 94 are situated on two ends of the width W of the electrode 1. An active material layer unformed portion 94 is a part of the current collector 193 where an active material layer 195 is not formed and the current collector 193 is exposed. As shown in FIG. 16, the active material layer unformed portion 94 exists continuously along a longitudinal direction of the electrode 1 and has a constant width. The active material layer unformed portion 94 exists on two opposing sides of the electrode 1. In the electrode 1, a portion where the active material layer 195 is formed is called a center portion 96. The center portion 96 is situated in a central area of the width of the electrode 1. The center portion 96 exists continuously along the longitudinal direction of the electrode 1 and has a constant width. The electrode 1 may include the active material layer unformed portion 94 only on one end of the width of the electrode 1.

If the current collector 193 is a positive electrode current collector, the current collector 193 is preferably made of aluminum, stainless steel, and the like. If the current collector 193 is a negative electrode current collector, the current collector 193 is preferably made of metal foil such as of copper, nickel, and stainless steel. The current collector 193 may be prepared by forming a conductive layer, the main component of which is a carbon material, on a metal foil. A thickness of the current collector 193 is 5 to 50 µm, for example.

The active material layer 195 can be fabricated by, for example, preparing a slurry that contains an active material before doping with the alkali metal, a binder, and the like; applying thus prepared slurry on the current collector 193; and drying the slurry.

Example of the binder may include, rubber-based binders such as styrenebutadiene rubber (SBR) and NBR; fluorine-based resin such as polytetrafluoroethylene and polyvinylidene fluoride; polypropylene; polyethylene; polyimide; fluorine modified (meth)acrylic binder as disclosed in Japanese Unexamined Patent Application Publication No. 2009-246137.

The slurry may include other components in addition to the active material and the binder. Examples of those other components may include a conducting agent and a thickener. Examples of the conducting agent may include carbon black; graphite; vapor-grown carbon fiber; and metal powder. Examples of the thickener may include carboxyl methyl cellulose; sodium salt or ammonium salt; methyl cellulose; hydroxymethyl cellulose; ethyl cellulose; hydroxypropyl cellulose; polyvinyl alcohol; oxidized starch; phosphorylated starch; and casein.

The thickness of the active material layer 195 is not particularly limited. However, it is, for example, 5 to 500 µm, preferably 10 to 200 µm, and particularly preferably 10 to 100 µm.

The active material included in the active material layer 195 is not particularly limited as long as it is an electrode active material applicable to a battery or a capacitor that uses insertion/desorption of alkali metal ion. The active material may be a negative electrode active material or may be a positive electrode active material.

The negative-electrode active material is not particularly limited. Examples of the negative-electrode active material may include a carbon material. Examples of the negative-electrode active material may also include metal or semimetal, such as Si and Sn, that can be alloyed with lithium or a material that includes oxides of these metal or semimetal. Examples of the carbon material may include graphite, easily-graphitizable carbon, hardly-graphitizable carbon, and a composite carbon material. The composite carbon material is, for example, a material made by coating graphite particles with carbides of pitch and resin. Examples of the carbon material may include a carbon material disclosed in Japanese Unexamined Patent Application Publication No. 2013-258392. Specific examples of the metal or semimetal that can be alloyed with lithium or the material that includes oxides of these metal or semimetal may include materials disclosed in Japanese Unexamined Patent Application Publication No. 2005-123175 and Japanese Unexamined Patent Application Publication No. 2006-107795.

Examples of the positive-electrode active material may include transition metal oxides and sulfur-based active materials. Examples of the transition metal oxides may include cobalt oxide, nickel oxide, manganese oxide, and vanadium oxide. Examples of the sulfur-based active materials may include elemental sulfur and metal sulfides. Both of the positive-electrode active material and the negative-electrode active material may be made from a single substance or made by mixing two or more substances. The doping system 11 of the present disclosure is suitable for a case in which the negative-electrode active material is doped with the alkali metal. It is particularly preferable that the negative-electrode active material includes a carbon material or Si, or oxides of the carbon material or Si.

The alkali metal for doping the active material is preferably lithium or sodium; but lithium is particularly preferable.

In a case where the electrode 1 is used to manufacture a lithium-ion rechargeable battery, a density of the active material layer 195 is preferably 1.50 to 2.00 g/cc, and particularly preferably 1.60 to 1.90 g/cc. Meanwhile, in a case where the electrode 1 is used to manufacture a lithium ion capacitor, the density of the active material layer 195 is preferably 0.50 to 1.50 g/cc, and particularly preferably 0.70 to 1.20 g/cc.

In a case where a method of manufacturing an electrode, which will be explained later, is not implemented, the active material is not doped with the alkali metal. The active material is doped with the alkali metal as a result of implementing the method of manufacturing an electrode which will be explained later. The electrode 1, in which the active material is doped with the alkali metal, is the doped electrode 1A. The doped electrode 1A corresponds to an electrode that includes an active material doped with alkali metal.

### 4. Composition of Dope Solution

When using the electrode manufacturing apparatus 11, the dope solution is stored in the doping baths 15, 17, and 19. The dope solution includes alkali metal salt, and a first aprotic solvent. In the dope solution, a part of the alkali metal salt ionizes and produces an alkali ion. The dope solution corresponds to a solution containing an alkali metal ion. As the first aprotic solvent, an organic solvent that has a boiling point exceeding 150°C at one atmospheric pressure is preferable; and an organic solvent that has a boiling point exceeding 200°C at one atmospheric pressure is particularly preferable.

Examples of the first aprotic solvent may include, for example, ethylene carbonate, propylene carbonate, butylene carbonate, 1-fluoroethylene carbonate, dipropyl carbonate, γ-butyrolactone, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

As the first aprotic solvent, ionic liquids such as quaternary imidazolium salt, quaternary pyridinium salt, quaternary pyrrolidinium salt, and quaternary piperidinium salt may also be used. The first aprotic solvent may include a single component or may be a mixed solvent including two or more kinds of components.

In a case where the first aprotic solvent is an organic solvent that has a boiling point exceeding 150°C at one atmospheric pressure, the dope solution may include a solvent that has a boiling point of 150°C or lower at one atmospheric pressure. As the solvent having a boiling point of 150°C or lower at one atmospheric pressure, an aprotic organic solvent is preferable; such aprotic organic solvent specifically includes dimethyl carbonate, diethyl carbonate, ethyl methyl carbonate, acetonitrile, dimethoxyethane, tetrahydrofuran, dioxolane, and methylene chloride.

Among them, dimethyl carbonate and ethyl methyl carbonate are preferable, and dimethyl carbonate is particularly preferable. Content ratio of the solvent having a boiling point of 150°C or lower at one atmospheric pressure in solvents included in the dope solution is preferably 50 to 90 vol.% and particularly preferably 65 to 75 vol.%.

It is preferable that the alkali metal salt included in the dope solution is lithium salt or sodium salt. Examples of an anionic moiety included in the alkali metal salt may include phosphorous anion having a fluoro group such as PF₆⁻, PF₃(C₂F₅)₃⁻, and PF₃(CF₃)₃⁻; boron anion having a fluoro group or a cyano group such as BF₄⁻, BF₂(CF)₂⁻, BF₃(CF₃)⁻, and B(CN)₄⁻; sulfonyl imide anion having a fluoro group such as N(FSO₂)₂⁻, N(CF₃SO₂)₂⁻, and N(C₂F₅SO₂)₂⁻; and organic sulfonic acid anion having a fluoro group such as CF₃SO₃⁻. It is preferable that the alkali metal salt is a fluorine-containing compound.

Concentration of the alkali metal salt in the dope solution is preferably 0.1 mol/L or higher, and more preferably within a range from 0.5 to 1.5 mol/L. In a case where the concentration of the alkali metal salt in the dope solution is within this range, doping with alkali metal proceeds efficiently.

The dope solution may further include an additive such as vinylene carbonate, vinyl ethylene carbonate, 1-fluoroethylene carbonate, 1-(trifluoromethyl)ethylene carbonate, succinic anhydride, maleic anhydride, propane sultone, and diethyl sulfone.

### 5. Method of Manufacturing Electrode

When manufacturing the doped electrode 1A by using the doping system 11, the following steps are taken firstly as a preparation to manufacture the doped electrode 1A. The electrode 1, the active material of which is not yet doped with the alkali metal, is wound around the supply roll 101. The dope solution is stored in the doping baths 15, 17, 19. The dope solution is what has been explained in "4. Composition of Dope Solution" mentioned above.

Then, the electrode 1 is conveyed by the group of conveyor rollers from the supply roll 101 to the winding roll 103 along the aforementioned path. The path to convey the electrode 1 passes through the doping baths 15, 17, 19. When the electrode 1 passes through the doping baths 15, 17, 19, the active material included in the active material layer 195 is doped with the alkali metal. As a consequence, the electrode 1 becomes the doped electrode 1A.

The group of conveyor rollers further conveys the doped electrode 1A to the cleaning baths 21, 23. The doped electrode 1A is cleaned in the cleaning baths 21, 23 while being conveyed by the group of conveyor rollers.

The group of conveyor rollers continuously conveys the doped electrode 1A to the tab cleaner 117. The tab cleaner 117 cleans the active material layer unformed portion 94 of the doped electrode 1A.

When the electrode 1 passes through the upstream bath 131 of the doping bath 15 and is conveyed to the conveyor roller 65, a part of the dope solution adhered to the electrode 1 is recovered firstly by the recovery unit 119. Then, the electrode 1 is sprayed with the gas and dried by the drying unit 201A. The electrode 1 is dry when the electrode 1 reaches the conveyor roller 65.

When the electrode 1 passes through the downstream bath 133 of the doping bath 15 and is conveyed to the conveyor roller 35, a part of the dope solution adhered to the electrode 1 is recovered firstly by the recovery unit 119. Then, the electrode 1 is sprayed with the gas and dried by the drying unit 201B. The electrode 1 is dry when the electrode 1 reaches the conveyor roller 35.

When the electrode 1 passes through the upstream bath 131 of the doping bath 17 and is conveyed to the conveyor roller 41, a part of the doping solution adhered to the electrode 1 is recovered firstly by the recovery unit 119. Then, the electrode 1 is sprayed with the gas and dried by the drying unit 201C. The electrode 1 is dry when the electrode 1 reaches the conveyor roller 41.

When the electrode 1 passes through the downstream bath 133 of the doping bath 17 and is conveyed to the conveyor roller 47, a part of the doping solution adhered to the electrode 1 is recovered firstly by the recovery unit 119. Then, the electrode 1 is sprayed with the gas and dried by the drying unit 201D. The electrode 1 is dry when the electrode 1 reaches the conveyor roller 47.

When the electrode 1 passes through the upstream bath 131 of the doping bath 19 and is conveyed to the conveyor roller 53, a part of the dope solution adhered to the electrode 1 is recovered firstly by the recovery unit 119. Then, the electrode 1 is sprayed with the gas and dried by the drying unit 201E. The electrode 1 is dry when the electrode 1 reaches the conveyor roller 53.

When the electrode 1 passes through the downstream bath 133 of the doping bath 19 and is conveyed to the conveyor roller 59, a part of the dope solution adhered to the electrode 1 is recovered firstly by the recovery unit 119. Then, the electrode 1 is sprayed with the gas and dried by the drying unit 201F. The electrode 1 is dry when the electrode 1 reaches the conveyor roller 59.

An amount of gas flow is not particularly limited. The greater the amount of gas flow is, the more easily the electrode 1 can be dried. The higher the temperature of the gas is, the more easily the electrode 1 can be dried. However, in a case the gas is those that may react to the doped electrode 1A, such as nitrogen gas and carbon dioxide gas, the temperature of the gas is preferably 40°C or lower.

As mentioned above, in the method of manufacturing an electrode in the present disclosure, the electrode 1 after being dried is brought into contact with the electric power supply roller. Accordingly, it is possible to inhibit precipitation of the alkali metal on the surface of the electric power supply roller.

In the method of manufacturing an electrode in the present disclosure, the electrode 1 is dried by using the first blower 213 and the second blower 215 that spray the gas onto the electrode 1. This further facilitates drying of the electrode 1.

In the method of manufacturing an electrode in the present disclosure, the second blower 215 sprays the gas onto a surface of the electrode 1 that later contacts the electric power supply roller and dries the surface. According to the method of manufacturing an electrode in the present disclosure, it is therefore possible to further inhibit precipitation of the alkali metal on the surface of the electric power supply roller.

The first blower 213 and the second blower 215 are arranged to interpose the electrode 1 therebetween. Accordingly, the first blower 213 and the second blower 215 can spray the gas onto two surfaces of the electrode 1 and dry the two surfaces.

The first blower 213 and the second blower 215 include, for example, a slit-shaped opening 223 shown in FIG. 12. In this case, the effect of the first blower 213 and the second blower 215 to dry the surfaces of the electrode 1 is further increased.

The first blower 213 and the second blower 215 include, for example, two or more openings 223 shown in FIG. 10 or FIG. 14. In this case, the effect of the first blower 213 and the second blower 215 to dry the surfaces of the electrode 1 is further increased.

As shown in FIG. 14 and FIG. 15 in particular, in a case where the gas is sprayed in two or more directions as viewed along the axis of the first blower 213 and the second blower 215, the effect of the first blower 213 and the second blower 215 to dry the surfaces of the electrode 1 is further increased.

The doping system 11 is suitable to manufacture the negative electrode that is used in alkali-ion capacitors or batteries, more suitable to manufacture the negative electrode that is used in alkali-ion capacitors or rechargeable batteries, and particularly suitable to manufacture the negative electrode that is used in lithium-ion capacitors or lithium-ion rechargeable batteries.

In a case where lithium is occluded in the negative electrode active material of a lithium ion capacitor, a doping amount of the alkali metal is preferably 70 to 95% relative to a theoretical capacity of the negative electrode active material. In a case where lithium is occluded in the negative electrode active material of a lithium-ion rechargeable battery, the doping amount of the alkali metal is preferably 10 to 30% relative to the theoretical capacity of the negative electrode active material.

### 6. Method of Manufacturing Power Storage Device

A method of manufacturing a power storage device in the present disclosure is a method of manufacturing a power storage device comprising a positive electrode, a negative electrode, and an electrolyte. In the method of manufacturing a power storage device in the present disclosure, the negative electrode is manufactured by using the aforementioned "5. Method of Manufacturing Electrode".

Examples of the power storage device may include a capacitor and a battery. The capacitor is not particularly limited as long as it is a capacitor that uses insertion/desorption of the alkali metal ion. Examples of such capacitor may include a lithium ion capacitor and a sodium ion capacitor. Among these examples, the lithium ion capacitor is preferable.

The basic configuration of the positive electrode included in the capacitor may be a typical configuration. It is preferable to use activated carbon as the positive electrode active material.

A form of electrolyte included in the capacitor is usually a liquid electrolyte solution. The basic configuration of the electrolyte solution is the same as that of the aforementioned dope solution. A concentration of the alkali metal ion in the electrolyte is preferably 0.1 mol/L or more, and more preferably within a range of 0.5 to 1.5 mol/L. The electrolyte may be in a gel form or a solid form for a purpose of inhibiting leakage.

The capacitor may include a separator between the positive electrode and the negative electrode to reduce physical contact between the positive electrode and the negative electrode. Examples of the separator may include a nonwoven cloth or a porous film made from a material such as cellulose rayon, polyethylene, polypropylene, polyamide, polyester, and polyimide.

Examples of a structure of the capacitor may include a laminated cell having a laminate formed from three or more of a plate-like component unit; the plate-like component unit includes the positive electrode, the negative electrode, and the interposed separator; and the laminate is enclosed in an external film.

Examples of the structure of the capacitor may also include a wound cell having a laminate formed by winding a belt-like component unit, which includes the positive electrode, the negative electrode, and the interposing separator, and having thus formed laminate stored in a square or cylindrical container.

The capacitor can be manufactured by, for example, forming a basic structure including at least the negative electrode and the positive electrode, and introducing the electrolyte in the basic structure.

For the lithium ion capacitor, a density of the active material layer 195 is preferably 0.50 to 1.50 g/cc, and particularly preferably 0.70 to 1.20 g/cc.

The battery is not particularly limited as long as it is a battery that uses insertion/desorption of the alkali metal ion. The battery may be a non-rechargeable battery or a rechargeable battery. Examples of the battery may include a lithium-ion rechargeable battery, a sodium ion rechargeable battery, and an air battery. Among these examples, the lithium-ion rechargeable battery is preferable.

The basic configuration of the positive electrode included in the battery may be a typical configuration. In addition to these examples already introduced, an organic active material such as a nitroxy radical compound, and oxygen may also be used as the positive-electrode active material.

A configuration of the electrolyte included in the battery and a configuration of the battery itself are the same as those of the capacitor. The battery can be manufactured by, for example, forming a basic structure including at least the negative electrode and the positive electrode, and introducing the electrolyte in the basic structure

### <Examples>

### 1. Example 1

### (1) Manufacture of Negative Electrode

A long strip-shaped current collector 193 was prepared. The current collector 193 was used as the negative electrode current collector. The size of the current collector 193 was 132 mm in width and 8 µm in thickness. The surface roughness Ra of the current collector 193 was 0.1 µm. The current collector 193 was made from copper foil. The active material layer 195 was formed on two opposing sides of the current collector 193. The active material layer 195 was the negative electrode active material layer. The thickness of the active material layer 195 was 65 µm.

The amount of application of the active material layer 195 on one side of the current collector 193 was 50 g/m². The active material layer 195 was formed along a length of the current collector 193. The active material layer 195 was formed from an end portion of the width W of the current collector 193 for 120 mm in width. The width of the active material layer unformed portion 94 along the other end portion of the width W of the current collector 193 was 12 mm. Then, after drying and pressing, the electrode 1 was obtained.

The active material layer 195 contained the negative electrode active material, carboxymethyl cellulose, acetylene black, and the binder with a mass ratio of 88:4:5:3. The negative electrode active material was a graphite-based active material. The binder was a fluorine acrylic resin. D50 of the graphite-based active material was 5 µm. A BET specific surface area of the graphite-based active material was 10 m²/g.

The electrode manufacturing apparatus 11 shown in FIG. 1 was prepared, and the electrode 1 was placed. The counter electrode units 137, 139, 141, 143 were stored in each of the doping baths 15, 17, 19. Then, the dope solution was supplied into the doping baths 15, 17, 19. The dope solution was a solution that included 1.2M of LiPF₆. The solvent of the dope solution was a mixed solution of EC (ethylene carbonate) and DMC (dimethyl carbonate) with a volume ratio of 3:7.

The electrical configuration of the doping system 11 was the first electrical configuration shown in FIG. 2. The electric potential of each of the first terminal 109A and the first terminal 110A was 0 V. The electric potential of each of the second terminal 109B and the second terminal 110B was +3 V.

Then, 50 A of electric current was supplied while the electrode 1 was conveyed at a speed of 2 m/min. At this time, the center of the width W of the active material layer 195 included in the electrode 1 matched the center of the width W of the lithium metal plate included in the counter electrode unit 51. When the electrode 1 passed through the doping baths 15, 17, 19, the negative electrode active material in the active material layer 195 was doped with lithium about 80% relative to the theoretical capacity. The electrode 1 accordingly became the doped electrode 1A.

The electrode 1 that was being conveyed was dried by using the drying units 201A to 201F by the aforementioned method. Each of the first blowers 213 and the second blowers 215 disposed in the drying units 201A to 201F was a pipe with a diameter of 10 mm and a length of 184 mm. The material used to form the first blowers 213 and the second blowers 215 was SUS. The SUS corresponds to a metal.

The first blowers 213 and the second blowers 215 each included the openings 223 shown in FIG. 10 and FIG. 11. The diameter of the openings 223 was 1 mm. The number of the openings 223 was 20. The pitch between the openings 223 was 8 mm each.

The first blower 213 did not spray the gas. Only the second blower 215 sprayed the gas. The gas was sprayed onto the second surface 221 by the second blower 215. The gas the second blower 215 sprayed onto the electrode 1 was nitrogen gas. The amount of flow of the nitrogen gas in the entire second blower 215 was 5 L/min. The second surface 221 of the electrode 1 was dried by the drying units 201A to 201F, therefore, the electrode 1 was dry when the electrode 1 came into contact with the conveyor rollers 65, 35, 41, 47, 53, 59.

After having the doped electrode 1A pass through the doping baths 15, 17, 19 and the cleaning baths 21, 23, spraying argon onto the doped electrode 1A to dry the electrode 1A, the doped electrode 1A was wound up. 25°C of DMC was stored in the cleaning baths 21, 23. The doped electrode 1A was thus manufactured as mentioned above.

### (2) Dope Evaluation

During the pre-doping, a dope evaluation was conducted. The dope evaluation is an evaluation related to likeliness of voltage increase during the pre-doping. The following are criteria for the dope evaluation.
AA: An absolute value of a stable voltage during pre-doping is less than 3.0 V.
A: The absolute value of the stable voltage is 3.0 V or more and less than 3.3 V.
B: The absolute value of the stable voltage is 3.3 V or more and less than 3.6 V.
C: The voltage is 3.6 V or more regardless of whether the voltage during the pre-doping is stabilized.

The stable voltage means a voltage of a time when a change in the voltage becomes ± 0.05 V or less after the pre-doping is initiated. In Example 1, the result of the dope evaluation was A, and the stable voltage was 3.05 V. In Example 1, there was no continuous increase of the voltage during the pre-doping. Table 1 shows the results of the dope evaluation.

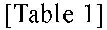

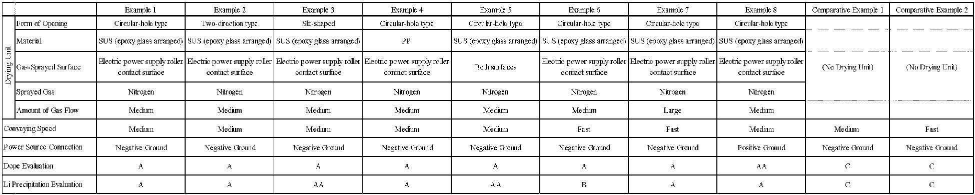

In Table 1, the "circular-hole type" means the openings 223 shown in FIG. 10 and FIG. 11; the "slit-shaped" means the slit-shaped opening 223 shown in FIG. 12 and FIG. 13; and the "two-direction type" means the openings 223 shown in FIG. 14 and FIG. 15.

The "material" means the material used to form the first blower 213 and the second blower 215. The "gas-sprayed surface" means a surface or surfaces of two opposing surfaces of the electrode 1 onto which the gas was sprayed. The "electric power supply roller contact surface" is the second surface 221. The "epoxy glass arranged" means that the drying units 201A to 201F included the connecting portions 217 made of epoxy glass.

The "power source connection method" means the electrical configuration in the doping system 11. The "negative ground" means the first electrical configuration shown in FIG. 2. The "positive ground" means the second electrical configuration shown in FIG. 3.

### (3) Li Precipitation Evaluation

During the pre-doping, a Li precipitation evaluation was conducted. The Li precipitation evaluation is an evaluation related to likeliness of Li precipitation on the surface of the electric power supply roller when the belt-like electrode 1 is continuously doped. The following are criteria for the Li precipitation evaluation.
AA: Li precipitation was first observed when the electrode 1 was doped for a length of 7500 m or more.
A: Li precipitation was first observed when the electrode 1 was doped for a length of 3000 m or more and less than 7500 m.
B: Li precipitation was first observed when the electrode 1 was doped for a length of 1000 m or more and less than 3000 m.
C: Li precipitation was observed before doping 1000 m of the electrode 1.

Table 1 shows the results of the Li precipitation evaluation.

### 2. Example 2

A negative electrode was manufactured basically in the same manner as in Example 1. However, the first blowers 213 and the second blowers 215 included in the drying units 201A to 201F each have the openings 223 shown in FIG. 14 and FIG. 15. As shown in FIG. 15, viewing along the axis of the first blower 213 and the second blower 215, the direction of a gas 225 sprayed by a part of the openings 223 and the direction of a gas 225 sprayed by the rest of the openings 223 made an angle of 45 degrees.

The size and material of the first blower 213 and the second blower 215, the diameter of the openings 223, the pitch of the openings 223, and the number of the openings 223 were the same as those of Example 1.

The dope evaluation and the Li precipitation evaluation were conducted in the same manner as in Example 1. Li precipitation was first observed on the electric power supply roller when 7000 m of the electrode 1 was doped. No continuous increase of the voltage was observed during the pre-doping. The stable voltage was 3.07 V. Table 1 shows the results of the evaluations.

### 3. Example 3

A negative electrode was manufactured basically in the same manner as in Example 1. However, the first blowers 213 and the second blowers 215 included in the drying units 201A to 201F each have the slit-shaped opening 223 shown in FIG. 12 and FIG. 13. The width of the opening 223 was 1 mm. The length of the opening 223 was 150 mm. The size and the material of the first blower 213 and the second blower 215 were the same as those of Example 1.

The dope evaluation and the Li precipitation evaluation were conducted in the same manner as in Example 1. Li precipitation was not observed on the electric power supply roller even after doping 10000 m of the electrode 1. No continuous increase of the voltage was observed during the pre-doping. The stable voltage was 3.04 V. Table 1 shows the results of the evaluations.

### 4. Example 4

A negative electrode was manufactured basically in the same manner as in Example 1. However, the first blowers 213 and the second blowers 215 were polypropylene (PP) pipes. The drying units 201A to 201F did not include the connecting portion 217.

The dope evaluation and the Li precipitation evaluation were conducted in the same manner as in Example 1. Li precipitation was first observed on the electric power supply roller when 5000 m of the electrode 1 was doped. No continuous increase of the voltage was observed during the pre-doping. The stable voltage was 3.06 V. Table 1 shows the results of the evaluations.

### 5. Example 5

A negative electrode was manufactured basically in the same manner as in Example 1. However, the gas was sprayed onto the electrode 1 also from the first blower 213 in addition to the second blower 215. When the electrode 1 reached the electric power supply roller, the first surface 219 was also dry in addition to the second surface 221.

The dope evaluation and the Li precipitation evaluation were conducted in the same manner as in Example 1. Li precipitation was first observed on the electric power supply roller when 8000 m of the electrode 1 was doped. No continuous increase of the voltage was observed during the pre-doping. The stable voltage was 3.05 V. Table 1 shows the results of the evaluations.

### 6. Example 6

A negative electrode was manufactured basically in the same manner as in Example 1. However, the conveying speed of the electrode 1 was set to 4 m/min. The dope evaluation and the Li precipitation evaluation were conducted in the same manner as in Example 1. Li precipitation was first observed on the electric power supply roller when 2500 m of the electrode 1 was doped. No continuous increase of the voltage was observed during the pre-doping. The stable voltage was 3.08 V. Table 1 shows the results of the evaluations.

### 7. Example 7

A negative electrode was manufactured basically in the same manner as in Example 6. However, the amount of nitrogen gas flow was set to 10 L/min. The dope evaluation and the Li precipitation evaluation were conducted in the same manner as in Example 1. Li precipitation was first observed on the electric power supply roller when 5000 m of the electrode 1 was doped. No continuous increase of the voltage was observed during the pre-doping. The stable voltage was 3.05 V. Table 1 shows the results of the evaluations.

### 8. Example 8

A negative electrode was manufactured basically in the same manner as in Example 1. However, the electrical configuration of the doping system 11 was the second electrical configuration shown in FIG. 3. The electric potential of each of the first terminal 109A and the first terminal 110A was -3 V. The electric potential of each of the second terminal 109B and the second terminal 110B was 0 V.

The dope evaluation and the Li precipitation evaluation were conducted in the same manner as in Example 1. Li precipitation was first observed on the electric power supply roller when 5000 m of the electrode 1 was doped. During the pre-doping, the voltage was a negative value, and no continuous further increase of the absolute value of the voltage was observed. The stable voltage was a negative value, and the absolute value of the stable voltage was less than 3.0 V. Table 1 shows the results of the evaluations.

### 9. Comparative example 1

A negative electrode was manufactured basically in the same manner as in Example 1. However, the doping system 11 did not include the drying units 201A to 201F. When the electrode 1 reached the electric power supply roller, the first surface 219 and the second surface 221 of the electrode 1 were wet with the dope solution.

The dope evaluation and the Li precipitation evaluation were conducted in the same manner as in Example 1. When 500 m of the electrode 1 was doped, a large amount of Li was precipitated on the electric power supply roller. During the pre-doping, the voltage increased to 3.6 V or higher, which prevented the pre-doping from being continued. Table 1 shows the results of the evaluations.

### 10. Comparative example 2

A negative electrode was manufactured basically in the same manner as in Comparative example 1. However, the conveying speed of the electrode 1 was set to 4 m/min. The dope evaluation and the Li precipitation evaluation were conducted in the same manner as in Example 1. When 250 m of the electrode 1 was doped, a large amount of Li was precipitated on the electric power supply roller. During the pre-doping, the voltage increased to 3.6 V or higher, which prevented the pre-doping from being continued. Table 1 shows the results of the evaluations.

### <Other Embodiments>

Although the embodiments of the present disclosure have been explained hereinbefore, implementation of the present disclosure should not be limited to the aforementioned embodiments and may be modified in various modes.
(1) Functions of one element in each of the aforementioned embodiments may be performed by two or more elements. Functions of two or more elements may be performed by one element. A part of configurations of each of the aforementioned embodiments may be omitted. At least a part of the configurations of each of the aforementioned embodiments may be added to or replaced with a different configuration of the aforementioned embodiments.
(2) Aside from the aforementioned doping system, the present disclosure can also be implemented in various forms such as, a higher system that includes the present doping system as an element, a program to operate a computer as a controller of the doping system, a non-transitory tangible storage medium such as a semiconductor memory storing this program, and a doping method.

## Claims

1. A doping system configured to dope an active material included in an electrode with an alkali metal, the system comprising:
a doping bath configured to store a solution containing alkali metal ion and a counter electrode unit;
a conveyor unit configured to convey the electrode along a path that passes through the doping bath;
a connection unit including an electrically conductive electric power supply roller that contacts the electrode, the connection unit being configured to electrically couple the electrode to the counter electrode unit; and,
a drying unit configured to spray a gas onto the electrode that passed through the doping bath and is being conveyed to the electric power supply roller.

2. A method of manufacturing an electrode including an active material doped with an alkali metal, the method comprising:
conveying an electrode including an active material along a path that passes through a doping bath, wherein the doping bath stores a solution containing alkali metal ion and a counter electrode unit;
drying the electrode that passed through the doping bath; and
electrically coupling the electrode thus dried to the counter electrode unit.

3. The method of manufacturing an electrode according to claim 2,
wherein the electrode is dried by using a blower that sprays a gas onto the electrode.

4. The method of manufacturing an electrode according to claim 3,
wherein an electrically conductive electric power supply roller that contacts the electrode is used when electrically coupling the electrode thus dried to the counter electrode unit, and
wherein the blower is arranged to spray the gas onto a surface that contacts the electric power supply roller among surfaces of the electrode.

5. The method of manufacturing an electrode according to claim 3 or 4,
wherein the electrode is dried by using two or more of the blowers arranged to interpose the electrode.

6. The method of manufacturing an electrode according to any one of claims 3 to 5,
wherein the blower includes a slit-shaped opening that is used to spray the gas onto the electrode.

7. The method of manufacturing an electrode according to any one of claims 3 to 5,
wherein the blower includes two or more openings that are used to spray the gas onto the electrode.

8. The method of manufacturing an electrode according to any one of claims 3 to 7,
wherein the gas includes at least one kind of gas selected from a group consisting of argon gas, helium gas, neon gas, nitrogen gas, carbon dioxide gas, and dehumidified air removed of moisture.

9. The method of manufacturing an electrode according to any one of claims 3 to 8,
wherein a material used to form the blower includes at least one kind of material selected from a group consisting of polyolefin resin, polyester resin, polyarylate resin, polyurethane resin, polyurethane resin, polycarbonate resin, polyamide resin, polyimide resin, polyphenylene sulfide resin, and fluorine-based resin.

10. The method of manufacturing electrode according to any one of claims 3 to 8,
wherein a material used to form the blower includes at least one kind of material selected from a group consisting of a metal, an alloy of two or more kinds of metals, an oxide of the metal or the alloy, and a nitride of the metal or the alloy.

11. A doping system configured to dope an active material included in an electrode with an alkali metal, the system comprising:
a doping bath configured to store a solution containing alkali metal ion and a counter electrode unit;
a conveyor unit configured to convey the electrode along a path that passes through the doping bath;
a connection unit including an electrically conductive electric power supply roller that contacts the electrode, the connection unit being configured to electrically couple the electrode to the counter electrode unit; and,
a power source configured to be coupled to a main body of the doping system, insulated from the doping bath, and the electric power supply roller,
wherein an electric potential of a terminal of the power source that is coupled to the electric power supply roller is lower than an electric potential of a terminal of the power source that is coupled to the main body.
